# EUROPEAN PATENT APPLICATION

(11) **EP 4 389 522 A1**
(43) Date of publication of application: **26.06.2024**
(21) Application number: 22857948.8
(22) Date of filing: 04.08.2022
(51) Int. Cl.: B60Q 1/52, B60Q 1/26, G08B 25/10

(54) **ILLUMINATED DEVICE FOR SIGNPOSTING AN EMERGENCY SITUATION**

(30) Priority: 16.08.2021 ES 202131679 U
(71) Applicant: Netun Solutions, S.L., 36201 Vigo (Pontevedra) (ES)
(72) Inventor: TORRE SARMIENTO, Jorge, 36201 Vigo (Pontevedra) (ES)
(74) Representative: Temiño Ceniceros, Ignacio
(86) International application number: PCT/ES2022/070524
(87) International publication number: WO 2023/021229

(57) **Abstract**

The present invention relates to a light signalling device for an emergency situation, comprising a body or casing, a translucent lamp cover and a lid, which internally comprises a flared reflector, and an electronics board with a plurality of emergency LED luminaires oriented and centred with respect to the reflector, and which comprises a power supply arranged in at least one internal cavity, as well as an activation push button, and which is characterised in that it comprises a first geolocation and positioning module and a receiving antenna, as well as a second narrow band signal emission module equipped with a transmitting antenna and a telecommunications card to launch a location signal to the telephony network when the equipment is active, both modules being connected to an internal control module.

## Description

### Field of the invention

The present invention describes a new type of light signalling device for emergencies, aimed at the transport sector and more specifically the field of road safety. Therefore, this invention is comprised in the different systems and methods for managing emergency situations, and more specifically in emergency situations in vehicles.

The light device object of the present invention provides high-intensity emergency visual signalling in conjunction with a geolocation system associated with the device itself with very low consumption, high efficiency and signal precision, and it furthermore has elements that allow obtaining a visual indicator of efficient output of the telecommunication signal based on the emission of the signal, and an additional security that allows certifying by other means that said signal has been emitted, without interfering with the normal operation of the equipment; in addition to this, other novelties are introduced, such as continuous control of the state of the battery or autonomous power supply by its own means and from an associated device, or a controlled low-intensity, sequential and timed flashing format to avoid dazzling, a twilight control cell or sensor to optimize the power of the flashing based on ambient light; a new safety battery lid equipped with anchoring and fastening means for anchoring and fastening the main device; and finally a push button provided with means so that the emission of the emergency luminous signal is intuitive for a user.

### State of the art

The use of different types of light devices for an emergency, which has the purpose of signalling breakdowns or accidents on the roads, and the main function of which is to minimize the risk of being run over associated with the attempt to place a pre-signalling element more or less far away from the generated obstacle, is known.

There are a large number of these devices that have general common characteristics, especially the emission of a light beam of a certain intensity capable of making the point of light visible from tens of meters. Many of them are connected directly to an external power source, such as a vehicle battery, which, for example, in Spain are known as type V2 professional regulatory signals; but another part of them are autonomous, powered by batteries, aimed at private users for the signalling of a specific incident, as is the case of the light signal called V16, and which, in addition to emitting a light beam, as specified in the specific regulation, must be able to be connected by its own means and anonymously to the servers dependent on the General Directorate of Traffic with the location data of the incident, using the mobile phone network; that is, this connection must occur without the intermediation of other mobile devices, such as telephones, in order to achieve direct communication free of personal data and in order to be able to notify other vehicles equipped with associated connectivity, of the proximity of the signalled incident, as well as to publish the incident on electronic information panels in a more direct way than the current means, which need to make calls from telephone poles positioned in the most critical cases 500 meters at most from the place of the incident, previously calling the emergency service at 112 or the like.

However, in the state of the art, the possibility to know about the incident is not offered to the user who is signalling or to other drivers or vehicles that lack the required connectivity means, this being the majority of the existing vehicle fleet, and it is also not possible to know the objective state of the communication thereof, that is, if the signal has reached its destination, a fact that seriously affects both the safety of the affected user, as well as the rest of the drivers who have not been able to view a panel because it does not exist in the vicinity, or because they do not have a vehicle equipped with connectivity. It is noteworthy that the current means of communication depend entirely on telecommunications towers to be able to transfer the signal from the devices, therefore, in a shadow or low coverage area, it is very likely that the signal will not reach the receiving tower, and in these cases the user will never be correctly signalled, assuming a serious problem for their safety, which is solved with the present invention.

As regards the emission of light, a characteristic common to all the devices of both aforementioned classes is that they emit the maximum intensity of light from the moment they are activated. In the specific case of V16 type devices, directed as a general rule to users without previous experience in dangerous situations and without proper professional training, and these being signals of extremely sporadic use, only related to a specific emergency situation that can occur once or twice in the life of the vehicle or the user himself or herself, the risk of dazzling when activating the equipment by pressing the button is very high and can give rise to associated dangerous situations that are very critical and difficult to resolve if it is also considered that most stops are in low light conditions, which, together with a more than possible and reasonable situation of emotional stress, can give rise not only to dazzling, but also to the risk of suffering an even more serious incident as a consequence of this, caused by a temporary loss of vision.

In the field of communication and geolocation, the current systems necessary to be able to provide geolocation to a device of this type have a receiving antenna and a module which depend on satellites from which they receive the necessary data to be located on the earth's surface, and at the same time, the signal receiving device in turn requires a module and an signal transmitting antenna aimed at the telecommunications systems or networks associated with mobile telephony, in the bands known as GPRS (2G, 3G, 4G and 5G), to emit the received position to an external device or database, where the device location data is finally received. To achieve the connection with the telephony network, an electrical power supply is required, in this case batteries, and the necessary energy consumption until connectivity with the conventional telephony network is achieved through the aforementioned stations or repeaters. installed on the earth's surface are usually very high in the first few seconds, and also quite especially when in areas where the signal from the ground station is weaker due to the distance between said receiving station and the emitting device, and/or due to the interference of intermediate objects that reduce the signal, or even make it impossible, giving rise to what are known as shadow areas or areas exempt from coverage; this is much more critical if it depends on a simple battery. This can be solved with the technology known as narrow band, the usage characteristics of which are ideal for issuing data packets in small batches, and which to date has only been used in static devices or equipment. Therefore, no device known in the state of the art, in the field of road safety signalling, has this technology, since in these cases the object is almost always in motion, and usually at a speed that does not guarantee the success of constant reliable communication with this technology. In this sense, the present invention introduces narrow band technology in the field of communication in v16 type devices, since it allows the launch of the data received through the geopositioning module, directly through the telephony communication network, with very low battery consumption and with great efficiency and safety, minimizing possible emission errors associated with GPRS coverage in the 2G bands and evolutions thereof.

Additionally, the present invention can definitively solve the serious dazzling problem, which, as indicated, affects all existing devices in the state of the art, consisting of a light sequence of several cycles, or a timed light sequence, below the approximate threshold of 5% of its maximum intensity or the like, so that the user can safely activate his or her device and have the necessary time for its placement in the most suitable place or in the case of some countries, predefined, such as the roof of a vehicle. After a first sequence of low-intensity light beams, there follows a sequence that gradually increases until completing maximum intensity of the equipment only when it is located in its place outside of the visual range of the user, thus guaranteeing their personal safety, not causing any dazzling whatsoever, not even a simple annoyance, since the power threshold of the initial flash is merely indicative of the active state of the equipment, and where appropriate, the state of its remaining charge, both factors being of the utmost importance in autonomously powered equipment.

In addition, the present invention may comprise a twilight sensor located inside the cavity of the reflector, under the push button of the equipment, or even in the outer cavity if necessary, combined or not with the low-intensity flash sequence, the purpose of which is to define the final flash intensity depending on the intensity of the external ambient light, in order to avoid dazzling other drivers in conditions of little or scarce ambient light, or to reinforce the intensity of the luminaire, in the case of having to emit with intense sunlight during the day. This functionality is not known in light devices intended for the purpose of the present invention.

Additionally, the present device can have a lever-operated safety battery lid with a dual purpose, that of fastening the equipment in a balanced manner by means of a magnet with a single disc located in its geometric centre, having a variable diameter, and at the same time immobilizing the batteries inside the equipment, thanks to the combination with several ridges that define the position of the batteries themselves which, combined with a long safety tab, guarantees, together with the clipping located on the opposite side of said lid, the perfect, watertight and secure closure of the battery lid, which acts at the same time as a device for fastening the device to a ferrous surface, as well as for the power batteries inside.

Finally, the present invention can incorporate a zenithal push button centred on its lamp cover, which is translucent or transparent if preferred, and consistent with the perimeter of the reflector, the diameter of which allows a normal-sized finger not to interfere with the display of the data that one or more LEDs provide for the user with a view to knowing the operating state of the equipment, such as its level of battery consumption, telecommunication state or other information. This type of push button is also not known in light devices for emergency warning on the road.

Therefore, taking into account the light devices known in the state of the art and the existing problems in this industrial field, there is no known light device, preferably of the V16 type, that incorporates conventional satellite global location or geopositioning technology, combined with narrow band telecommunication technology, which allows safely connecting to the telephony network, even with very low coverage, without penalizing the consumption of batteries, furthermore achieving the objectives of greater efficiency for the main purpose of the equipment, which is visual signalling, guaranteeing the safety of the user and other drivers, without causing them to be dazzled, guaranteeing the stability of the device, the control of its operation in a simple and intuitive manner, and thereby, in short, the road safety of all users on any road. In addition, its structure differs from any other light device known in this industrial sector and allows obtaining the other advantages that have previously been indicated.

### Description of the invention

The light signalling device for an emergency situation, object of the present invention, consists of a mobile light signalling device with a structure and composition differing from any other similar device known in this industrial sector, and allows solving the problems indicated in the preceding section.

This light device, like others known in this industrial sector, is made up of a body or casing, a translucent lamp cover and a lid, which integrate all the elements for the operation of the device as an emergency luminaire, such as at least one flared reflector, and an electronics board with a series of oriented and centred LEDs, and a power supply by means of batteries, as well as an activation push button. The particularity of this invention lies in the fact that it further comprises a magnet associated with the stability of the device, an innovative push button, and that in addition to comprising a geolocation and positioning module and its receiving antenna, it comprises a second signal processing and management module in narrow band technology, equipped with a transmitting antenna, and a telecommunications card to launch a location signal to the telephony network when the equipment is active, in accordance with the technical parameters predefined in the safety regulations concerning V16 light signals, and as established by regulation must be equipped with connectivity by itself.

Additionally, the device can comprise a set of light state control components, which include a zenithal push button centred on the lamp cover and positioned on the inner face of the flared reflector, which in turn is supported or embedded on the central section of the electronics board of the equipment itself, on the inner surface of which there is arranged at least one equipment state control LED, as well as a twilight sensor device that captures the intensity of the external light, the purpose of which is to increase or decrease the intensity of the light in the normal signalling LEDs depending on the degree of light intensity outside the device. This type of zenithal button with this functionality is also not known in the state of the art.

Around the outer face of the flared reflector element, aligned with the focal point of the mentioned reflector, a series of high-intensity LEDs can be positioned to give the device, in conjunction with the body of the lamp cover and the reflector itself, the ability to emit light in a 360° pattern around the axis of support of the device itself. On this same electronics board, it is possible to provide additional receiving means for receiving a location signal, either via satellite or through triangulation by other means, as well as technical means for interpreting the data received and debugging same, and an integrated communications module for forwarding the location data to an external source, either an official database or an intermediate data debugging cloud. On that same board, there can be an additional communication module, preferably by means of the Bluetooth protocol or any other means existing in the state of the art, capable of reading the data from the equipment's own control module or receiving it from an external application connected to the debugging cloud or even to the publication of the location data, and to be able to forward it in one way or another to a communication device or module close to the emergency light device, be it a mobile phone, or even a connected vehicle equipped with the necessary technical means.

The device object of the present invention is powered by autonomous removable means such as a plurality of batteries, which in one possible embodiment of the invention may be of the non-rechargeable LR6 type or batteries if preferred, and for this purpose it has been provided with a cavity for the installation thereof shaped consistent with the shape and size of the mentioned batteries, also provided with a removable lid provided with a sealing gasket, and with a flexible clip; and on the opposite side there is a rounded continuous tab with a length from end to end of the lid itself, this lid being provided with a hole centred with the lid and with respect to the axis of the device itself where a magnet is housed, with the aim of keeping the device fixed in its position on a ferrous surface and at the same time fixing the position of the batteries inside the equipment itself due to their own ferrous qualities and their own format; and wherein the base of the device itself can also have an anti-slip system made up of elastomeric strips that prevent lateral movement even when it is not on a ferrous surface. Said lid may comprise means for centring or fixing the position of the batteries, consisting of separate positioning ribs consistent with the format of the battery to be installed inside the equipment, and which may even integrate their own polar centring by including hollow guides at the ends consistent with the shape of their positive and negative poles.

Taking these general aspects into account, the mode of operation of a possible embodiment of the invention is such that when the batteries are inserted, the device, by means of the control module, performs an automatic reading of the state of charge thereof, indicating it through a predefined colour or sequence in the LED inside the translucent interior cavity of the reflector where the emergency push button is located, visible through the zenithal area of the lamp cover, after which it turns off, remaining off until the emergency button is pressed or the batteries are replaced again.

When the emergency button is pressed, the LEDs located around the equipment reflector begin to flash in a dimmed mode; at the same time, the twilight sensor located inside the flared body of the reflector, under the translucent button, makes a first reading of the ambient light and predetermines the light intensity necessary for the signalling LEDs to regulate their power according to this reading, after the cycle in dimmed mode. Said dimmed cycle is determined by a predefined timer in the control module of the equipment, even additionally, if it takes a long time to place the equipment on a stable surface, through a possible accelerometer, by the signal that it releases once it is located on the final signalling surface according to the user's own decision.

When the equipment is in on mode, it is also receiving the GPS signal to determine its location through the module and its antenna, and at the same time it is emitting every few seconds a light indicator of the state of the battery in the LED, and furthermore, another light indicator of a different colour coinciding with the output of the location signal, in the same LED or another one located in the interior cavity of the reflector or even outside it if preferred; and through the low-consumption and high-efficiency narrow band module, in the UDP protocol or another one predetermined by the body receiving or debugging the signal, launches in the temporal sequence defined for this purpose by the regulations or case-based reasoning, a data frame that contains all the necessary data to determine the location of the signal in real time, in addition to those that are required or requested by the regulatory body, through the transmitting antenna.

In the off times between both signals, the twilight sensor performs a new reading, adapting the intensity of the emergency flash to the state of ambient light, this always being of greater intensity when the sensor detects values of a lot of ambient light, and of lesser intensity when the sensor detects values of zero ambient light.

At the same time, and because the equipment is not within his or her visual range, especially during the day, the user can search for it through the Bluetooth of his or her own mobile through the signal emitted by the module, or through the connectivity module of the vehicle, in order to link it directly, and to be able to display in real time the functionality state of the equipment with respect to its battery level, GPS signal reception, output signal emission, and signal adequacy state, or out of coverage state, and some other additional technical data, so that he or she can obtain certainty of the communication at all times, maintaining the anonymity of the main communication of the equipment. In addition, the same module in the Bluetooth protocol can be linked to an external application through the user's mobile phone or vehicle, where this data is received from it, when the user so prefers.

When the voltage of the batteries of the equipment falls below the predetermined working voltage, the LED located inside the reflector is activated, leaving a light signal on the inner ring of the translucent button, in order to warn the user of this possibility; this signal or any of the aforementioned signals can be combined or even replaced with a vibration device, or another similar device, the vibration system being the most appropriate due to its high efficiency when the equipment is resting on a hard surface such as the roof of a vehicle, capable of transmitting the effect of vibration converted into a sound signal of sufficient intensity to be perceived inside the passenger compartment without the interference of external or internal noise from the vehicle.

Finally, taking these previous aspects into account, this invention, compared to other existing devices in the state of the art, mainly of the V16 type, describes a new type of light signalling device that has a triangulation or location signal receiving module and antenna, as well as a signal debugging and output module through a suitable antenna in the high-efficiency and low-consumption band known as the narrow band, through the conventional telephony network, having other new elements that guarantee user safety from all possible points of view, the introduction of the initial dimmed and timed flash mode to avoid dazzling, or the twilight sensor limiting the power of the emergency flash, including the initial dimmed flash, depending on the state of the ambient light, or the integrated Bluetooth module that allows the reading of the operating state of the equipment such as the voltage level, reception and output of the location signal, respecting the anonymity of the device at all times, or knowing it through an external application accessible by means of a data transfer. Additionally, it presents the possibility of introducing a module for visual control of the state of the equipment integrated within the cavity of the reflector, preferably visible from the activation button itself, which allows knowing by means of a simple sequence of colours if the load is stable, if the signal has been sent, or the equipment has been outside the effective range of emission, as well as the state of consumption of the batteries, warning about this from the moment of its placement, and at the moment of the end of its useful life also in order to be able to be replaced, it is not necessary for the user to remain attentive to their wear.

It should be noted that, throughout the description and claims, the term "comprises" and the variants thereof are not intended to exclude other technical features or additional elements.

### Brief description of the Figures

In order to complete the description and to help a better understanding of the features of the invention, a set of two figures is presented in which the following is depicted by way of illustration and not limitation:

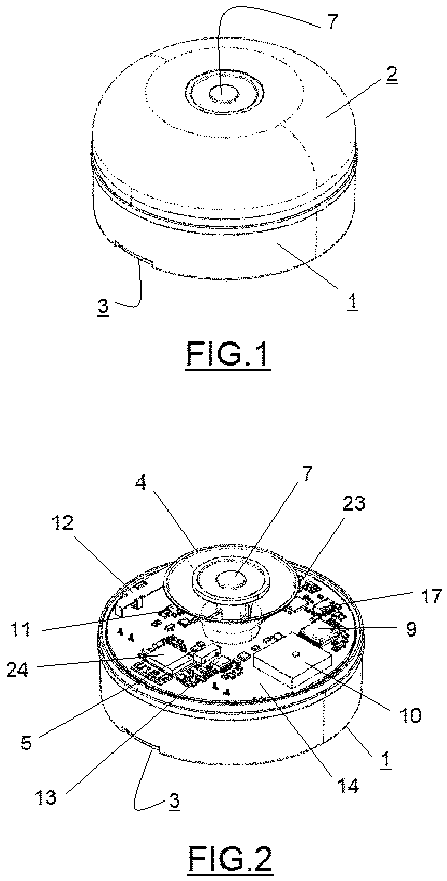

Figure 1 shows a depiction of an external view of the device object of the present invention.
Figure 2 shows a perspective view of the device without a lamp cover, where part of the elements that are protected by the translucent lamp cover and are part of the device object of the present invention can be seen.

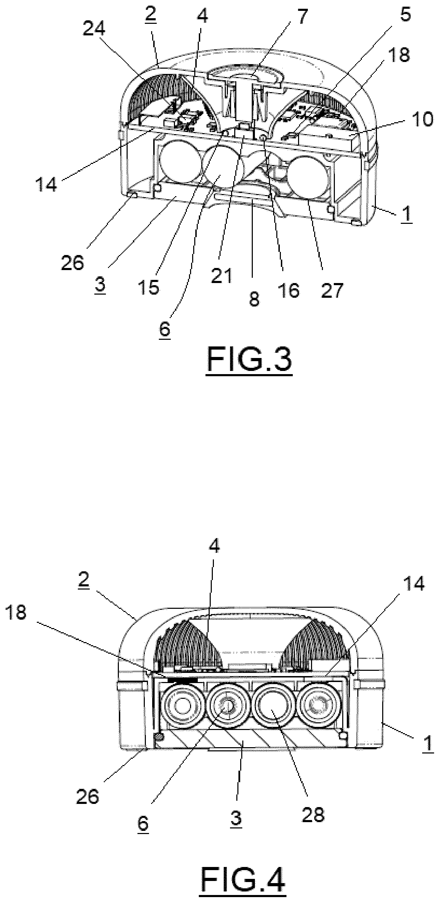

Figure 3 shows a perspective view of the device with a central cut-out, being able to observe part of the elements protected by the lamp cover and also housed inside the casing.
Figure 4 shows an internal section of the device object of the present invention, where the internal area where the batteries of the light device are housed is seen in detail.

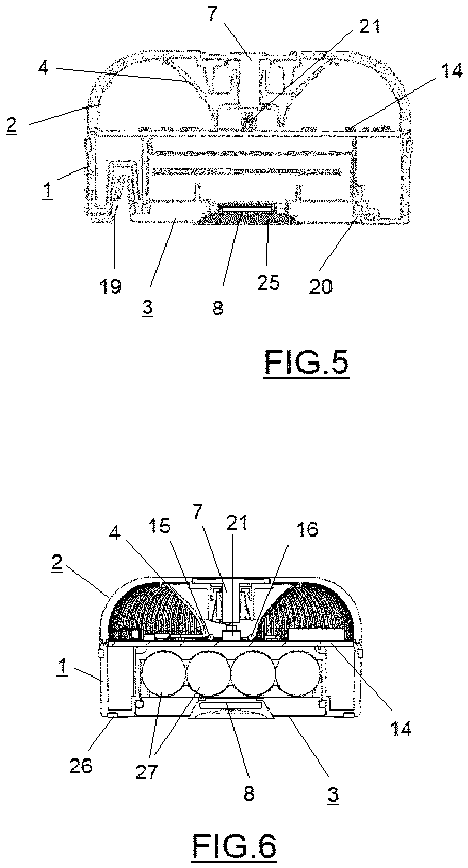

Figure 5 shows another internal section of the device object of the invention, where the cut-out is a central cut-out.
Figure 6 shows another internal section, where the cavities in which the batteries are housed can be observed.

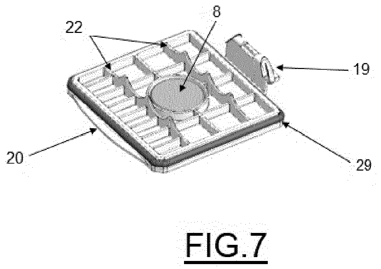

Figure 7 shows a perspective view of the lid of the device.

### Detailed description of an embodiment of the invention

As can be seen in the figures, a possible embodiment of the light device object of the present invention, being a mobile light device known in Spain as V16 signals, is a device comprising a body or casing (1), a translucent lamp cover (2) and a lid (3), wherein all the necessary elements for its operation as an emergency luminaire are integrated, and wherein the device comprises a flared reflector (4), and an electronics board (14) with a plurality of LED lights (5) oriented and centred with respect to the reflector, and comprising a power source (6) by means of batteries, arranged in at least one internal cavity (27), as well as an activation push button (7), and in the case of this specific embodiment, it further comprises a magnet (8), and wherein it also has the particularity, compared to any other known device, of comprising a first geolocation and positioning module (9) and a receiving antenna (10), as well as a second narrow band emission module (11), a narrow band signal processing and management module, equipped with a transmitting antenna (12) and a telecommunications card (13) for launching a location signal to the telephony network when the equipment is active, both modules (9 and 11) in connection with an internal control module (23).

This system, which comprises a geopositioning module (9) and its receiving antenna (10), an internal control module (23), and an emission module (11) and its transmitting antenna (12) and the telecommunications module or card (13) and telephone identification of the location and activation data of the luminaire and other support data necessary or provided for in the control module (23), allows the connection with an official database managed by the public administration of any class, or even a private one, either directly or through a cloud or an intermediate database between them, by means of low frequency waves with a longer wavelength, in the technology known as narrow band technology, managed through the conventional telephony network, without prejudice to integrating additional safety support in traditional GPRS type bands, such as 2, 3, 4, or 5-G. This device can, as is the case in the present embodiment, comprise a local communication module (17), either Bluetooth, Wi-Fi or the like, capable of connecting to other mobile or fixed devices close to the main device, in order to manage data such as the suitability of the output of the data emitted, as well as the reception and, where appropriate, certification of the conformity of the reception of the data in the external databases or cooperation centres, recipients or intermediaries of the data emitted directly by the device.

In this sense, the control module (23) is a programmable module, installed on the electronics board (14) of the geolocation and road signalling light device, equipped with the capacity to read the power consumption of the power supply (6) of the device and a support LED (15) of the RGB type or the like, installed inside a display module (21) of the equipment provided on the zenithal face thereof and determined by the internal face of the flared reflector (4) and the zenithal translucent face of the lamp cover (2) in order to determine, by means of a colour change, a visual indicator of the state of the batteries, and that the location data output signal is occurring normally.

As can be seen in the figures, the translucent zenithal push button (7) has a diameter consistent with the inner perimeter of a flared reflector (4), and since it is placed in the central zenithal area of the device it allows at the same time it is being pressed, by means of colours defined by a LED (15) located on the electronics board (14), immediately and also permanently displaying the state of consumption of the batteries of the equipment, by means of colours, and at the same time serve as a sealed cell or cone for the entry of ambient light through a twilight sensor (16) located inside the flared body of the reflector.

The twilight sensor (16) is controlled by the control module (23) installed on the electronics board (14), and its purpose is to read the zenithal incident ambient light on the equipment, and passing exclusively through of the central dome of the reflector (4) through a translucent push button (7) and the space between it and the edge of the reflector (4), and therefore, determines the correct reading of the intensity of the incident external light only at the highest point of the device, discarding all the incident light laterally on it, and doing so regardless of the state of light that affects the reflective main face of the reflector, wherein the plurality of aligned emergency LED luminaires (5) flash with respect to the focal point of the aforementioned reflector 4, doing so with a high intensity when the ambient light detected exceeds a predetermined clarity threshold prerecorded in the control module (23), or with a low intensity when the ambient light does not exceed said predefined threshold, which can be a partial or constant reading in order to adapt the operation of the equipment in relation to external changes while the equipment is in operation, without ever considering as a reading the power with which the plurality of LED luminaires (5) installed in the device emit.

The device has, as previously mentioned, the possibility of having an emergency light dimmed delayed sequential firing system, made up of a control module (23) and the possibility of its programming, and the plurality of emergency LED luminaires (5), which regulates the current and voltage input in the LED luminaires (5) of any V16 device or any other mobile signalling device of another class, lowering it to a parameter predefined by the control module (23), and with a delay also predefined by said module, in order to avoid dazzling a person at times or moments of little or no ambient lighting until the equipment remains stable on a final surface, wherein the power of the delayed flash can in turn also be controlled through the twilight sensor (16) itself. The emergency light dimmed delayed sequential firing system, with an initial timing of up to 10 seconds, is controlled in turn by a light sensor (24) for determining the delayed sequential firing that is integrated into the electronics board (14), in order to establish a predefined dimmed light pattern as long as the equipment is not stabilized in a fixed position for at least 5 seconds, or with mobility up to an additional predefined time range, at which time the established final power flash sequence will occur by reading the twilight sensor, leaving the light sensor element (24) inactive until the device is turned off or deactivated.

Additionally, the device comprises a system for quick reading of the operating state of the device, made up of the control module (23) that performs a periodic reading of the voltage of the power supply (6) of the batteries, and of the reception state of the location signal, and of the output state of the debugged data output to the receiving stations of the location data, capable of transmitting said data to a remote device through an emission module (11), or of making said data visible by means of light sequences of the LED (15).

Moreover, the battery lid (3) is made up of a rectangular body equipped with a fastening magnetic disc or magnet (8), centred with the geometric centre of the lid (3) and aligned with respect to the vertical axis of the device, in order to keep the device itself in a single centred and balanced position when it is supported on an ferrous surface of the vehicle, and which comprises at least one sheet (26) of elastomeric material, centred around the axis of the magnet itself, either on the lid (3) itself or at the base itself of the casing (1) of the device, which in combination with the magnet (8), guarantees the additional immobilization of the device, preventing its longitudinal displacement, either on an ferrous surface or on any flat surface, even if they are wet or damp. Said lid is equipped with a semicircular tab (20) arranged on the entire opposite side of the lid where there is a closing tab (19), the objective of which is to firmly and rigidly fasten the lid (3), maintaining its immovable position and preventing the breaking of the same tab (20) due to excessive pressure, or due to incorrect or negligent handling by the user himself or herself, and due to the pushing effect of the fastening magnet (8) itself, except when the opening flange is pressed (19) by a finger to change the batteries. Said lid (3) can have a series of guide ribs (22) consistent with the format of the supply batteries and with cavities (27) inside the casing (1) of the equipment, to determine the complete immobilization of the batteries inside the casing (1), especially in the event of a possible blow or strong vibration outside the equipment, guaranteeing their permanent connection with respect to the terminals (28) of each battery located inside the equipment. The lid can also include a perimeter gasket (29) that ensures the closure and tightness of the lid.

Additionally, in a possible alternative embodiment, the format for fastening by means of the magnet (8) can be replaced by other additional fastening forms, or even complementary ones combined with it, such as a suction cup (25).

On the other hand, the device can have an output signal emission state vibration warning system made up of the control module (23) that controls a vibrating micromotor (18) installed on the board (14) or inside the casing (1), which is activated depending on the value assigned to it by means of the control module (23), and which is capable of transmitting the vibration generated as a sound value inside the passenger compartment of any vehicle on which the device is supported, so that any user may perceive the operating state of the device based on the measurement value assigned to the vibrating micromotor (18) by the control module (23).

## Claims

1. A light signalling device for an emergency situation, comprising a body or casing (1), a translucent lamp cover (2) and a lid (3), wherein it internally comprises a flared reflector (4), and an electronics board (14) with a plurality of emergency LED luminaires (5) oriented and centred with respect to the reflector, and which comprises a power supply (6) arranged in at least one internal cavity (27), as well as an activation push button (7), and which is **characterised in that** it comprises a first geolocation and positioning module (9) and a receiving antenna (10), as well as a second narrow band signal emission module (11) equipped with a transmitting antenna (12) and a telecommunications card (13) to launch a location signal to the telephony network when the equipment is active, both modules (9 and 11) being connected to an internal control module (23).

2. The light signalling device for an emergency situation according to claim 1, **characterised in that** it comprises a local communication module (17) with wireless connectivity such as Bluetooth or Wi-Fi for communication with other mobile devices, and wherein the local communication module (17) is in connection with the control module (23).

3. The light signalling device for an emergency situation according to claim 1, **characterised in that** the activation push button (7) is translucent and is located in the central space arranged between the dome of the lamp cover and the edge of the reflector (4).

4. The light signalling device for an emergency situation according to claim 1, **characterised in that** it has a display module (21) installed on the electronics board (14) comprising a LED (15), wherein the display module (21) is located centred between the internal faces of the flared reflector (4) and under the zenithal translucent face of the lamp cover (2), the display module being in connection with the control module (23).

5. The light signalling device for an emergency situation according to any of the preceding claims, **characterised in that** it comprises a twilight sensor (16) for reading incident ambient light on the device in a zenithal manner, which is controlled by the control module (23) and is installed on the electronics board (14).

6. The light signalling device for an emergency situation according to claim 5, **characterised in that** it comprises the twilight sensor (16) located on the electronics board (14) next to the display module and below the translucent push button (7).

7. The light device for signalling an emergency situation according to claim 1, **characterised in that** it comprises a light sensor (24) for determining delayed sequential firing in connection with the control module (23) and which is integrated in the electronics board (14).

8. The light signalling device for an emergency situation according to claim 1, wherein the lid (3) comprises a magnetic disc or fastening magnet (8), centred with the geometric centre of the lid (3) and aligned with respect to the vertical axis of the device.

9. The light signalling device for an emergency situation according to claim 1 or 8, **characterised in that** it comprises at least one sheet (26) of elastomeric material for fastening at the base of the device.

10. The light signalling device for an emergency situation according to claim 1 or 8, **characterised in that** it comprises a fastening suction cup (25) at the base of the device.

11. The light signalling device for an emergency situation according to claim 8, **characterised in that** the lid is equipped with a semicircular tab (20) arranged on the opposite side of the lid where there is a closing flange (19).

12. The light signalling device for an emergency situation according to claim 8, **characterised in that** the lid comprises a series of guide ribs (22) consistent with the format of the battery power supply and with the cavities (27) inside the casing (1).

13. The light signalling device for an emergency situation according to claim 8, **characterised in that** the lid comprises a perimeter gasket (29).

14. The light signalling device for an emergency situation according to claim 1, **characterised in that** it comprises a vibrating micromotor (18) in connection with the control module (23).
